# EUROPEAN PATENT APPLICATION

(11) **EP 3 757 600 A1**
(43) Date of publication of application: **30.12.2020**
(21) Application number: 19182645.2
(22) Date of filing: 26.06.2019
(51) Int. Cl.: G01S 7/40, G01S 7/497, G01S 7/52, B64F 1/00, G01M 11/02, B64F 5/60

(54) **AIRCRAFT SENSOR TESTING DEVICE AND METHOD**

(71) Applicant: Volocopter GmbH, 76646 Bruchsal (DE)
(72) Inventor: Adolf, Florian-Michael, 60486 Frankfurt (DE); Ciarambino, Marco, 76297 Stutensee (DE)
(74) Representative: Lemcke, Brommer & Partner Patentanwälte Partnerschaft mbB

(57) **Abstract**

We propose a method of testing a navigation and safety system of an aircraft (2), preferably an autonomously navigating VTOL aircraft, which navigation and safety system comprises at least one sensor device, which sensor device has at least one sensor (3, 3') of a sensor type mounted in or on the aircraft (2), wherein a check routine is performed during which: a) the aircraft (2) is positioned relative to a test object (4) at a relative position, or vice versa; b) at least one property of the test object (4) is determined by means of the sensor (3, 3') and a corresponding sensor signal (S1), in particular a sensor signal (S1) which is dependent on the relative position, is generated; c) the sensor signal (S1) is compared with a known reference signal (RS) and a corresponding comparison signal (CS) is generated; and d) a maintenance routine for the sensor (3, 3') is triggered as a function of a property of the comparison signal (CS). We further propose a testing device (1) adapted to perform said method.

## Description

The invention relates to a method of testing a navigation and safety system of an aircraft, preferably an autonomously navigating (e)VTOL aircraft, which navigation and safety system comprises at least one sensor device, which sensor device has at least one sensor of a sensor type mounted in or on the aircraft, according to claim 1.

The invention further relates to a testing device for a navigation and safety system of an aircraft, preferably an autonomously navigating (e)VTOL aircraft, which navigation and safety system comprises at least one sensor device, which sensor device has at least one sensor of a sensor type mounted in or on the aircraft, according to claim 8.

One of the big issues with non-pilot assisted autonomous flight, i.e., autonomous aircraft navigation, is to ensure that flight relevant data gathered by the sensor devices installed on/in the aircraft are correct. Otherwise, onboard algorithms, which are operational within the aircraft's flight control system and devoted to the safe operation of the aircraft while relying on the above-mentioned sensor data, could yield unexpected and potentially catastrophic output. As an example, a dangerous flight trajectory could be computed, or an obstacle, which is present in a vicinity of the aircraft, could elude discovery. This could result, for example, in anything from a simple yet costly deviation from the correct flight trajectory to a crash of the aircraft, in the worst case.

It is the object of the present invention to provide a method and a device which can be used to circumvent the above-mentioned problems by ensuring that flight relevant data gathered by the sensor devices installed on/in the aircraft are correct. In this way, any onboard algorithms operational within the aircraft's flight control system will yield safe, predictable and reliable output.

This object is achieved by means of a method of testing a navigation and safety system of an aircraft as defined in claim 1 and by means of a testing device for a navigation and safety system of an aircraft as defined in claim 8. Advantageous further embodiments are defined in the dependent claims.

According to the invention, a method of testing a navigation and safety system of an aircraft, preferably an autonomously navigating (e)VTOL aircraft, which navigation and safety system comprises at least one sensor device, which sensor device has at least one sensor of a sensor type mounted in or on the aircraft, comprises: performing a check routine, during which: a) the aircraft is positioned relative to a test object at a relative position, or vice versa; b) at least one property of the test object is determined by means of the sensor and a corresponding sensor signal, in particular a sensor signal which is dependent on the relative position, is generated; c) the sensor signal is compared with a known reference signal and a corresponding comparison signal is generated; and d) a maintenance routine for the sensor is triggered as a function of a property of the comparison signal.

In the present context, "sensor device" may encompass the actual "sensor" (i.e., a physical entity which determines at least a property of its environment) together will auxiliary equipment, such as electronics, lenses, apertures, casings, etc. The two formulations are therefore used as synonyms, since a sensor will always be part of a sensor device, and neither of them can deliver "correct" data if the other is malfunctioning.

According to another aspect of the invention, a testing device for a navigation and safety system of an aircraft, preferably an autonomously navigating (e)VTOL aircraft, which navigation and safety system comprises at least one sensor device, which sensor device has at least one sensor of a sensor type mounted in or on the aircraft, comprises: a) a test object, relative to which the aircraft is positioned or positionable at a relative position, or vice versa; b) a test control unit for driving the sensor in order to determine at least one characteristic of the test object by means of the sensor and to generate a corresponding sensor signal, wherein the sensor signal preferably is dependent on said relative position; c) a comparison unit which is designed to compare the sensor signal with a known reference signal and to generate a corresponding comparison signal; and d) a maintenance control unit adapted to initiate a maintenance routine for the sensor in dependence on a characteristic of the comparison signal.

In connection with the present invention, it does not matter whether the aircraft or the test object is moved in order to achieve said relative positioning. In corresponding embodiments of the invention, either the aircraft or the test object or both the aircraft and the test object can be moved in order to achieve said relative positioning. This shall be included in the formulation "positioning the aircraft at a relative position" in relation to the test object, as used in the present specification and claims.

In order to overcome the above-mentioned problems, in a preferred embodiment of the invention, a procedure is proposed wherein at least one sensor system of an aircraft, which is preferably equipped with sensor devices of at least two different sensors types, is subjected to a sensor check routine, preferably in the form of an automated sensor suite check, in particular after the aircraft has landed on a landing site.

The aircraft's autonomous navigation and guidance systems are designed to allow for operational-safe failures and therefore can be advantageously equipped with sensor devices of at least two different sensor types. In this way, in case of failure or malfunction of one sensor system, the aircraft can still finish a current flight mission safely by considering data from the other sensor system.

Preferably, the at least two sensor types share a common operational (physical) domain (e.g., radio waves (RADAR) or optical waves (camera or LIDAR)) to dramatically decrease the possibility of erroneous output. Moreover, at least two different versions of the same sensor type can be employed for the same scope, in order to drastically reduce the possibility of a failure in similar time frames and operational circumstances.

Further, advantageously, multiple sensors of a common type can be used which are provided by different manufactures using different sensor components to decrease the risk of failures in similar fashion. Therefore, a higher reliability of the overall sensor system can be achieved.

More precisely, used sensor types can comprise any combination of RADAR sensors, optical sensors, e.g., monocular or stereo cameras, LIDAR sensors or other sensor types known in the art. The invention, however, is not limited to any particular type and/or number of sensors.

To assure that the different sensor or sensor devices produce reliable data, according to the invention an automated sensor suite check procedure (the check routine) is performed after landing of the aircraft, i.e., after positioning thereof, preferably on a landing site or platform with dedicated technological components installed on ground. Advantageously, the aircraft lands at a designated landing site or platform where usually specific interactions with the aircraft and human workers and/or robots are scheduled, such as, e.g., changing/handling of load, embarking/disembarking of passengers, battery swapping and/or refuelling, etc. - without limitation.

Furthermore, before, after or preferably at the same time with the aforementioned actions, the invention proposes a(n) (automated) sensor suite check (check routine) procedure of at least one, preferably two, most preferably all sensor/s (sensor types) installed onboard the aircraft, which sensor/s preferably is/are involved in safety-critical functions of the aircraft. This includes, in particular, sensors that emit and/or receive electromagnetic radiation, i.e., (visible) light or radio waves.

The proposed method can be advantageously employed prior to any (commercial) operation of the aircraft. Preferably, all sensor components are checked, their sensing performance is evaluated, and their relative positions and geometric parameters re-calibrated, in order to guarantee that the performance requirements are met during the aircraft's (commercial) operations.

The relative position between the aircraft and the test object (also referred to as reference object) therefore must be specified in a known manner. The at least one reference/test object (functioning as a marker) preferably is positioned within a field of view of a sensor to be tested. Once the relative position between the aircraft and the at least one test or reference object is set up correctly, the sensor check routine may start.

For example, knowing the exact position and orientation of the aircraft and of specific test objects (markers), which are located at specific locations and with a specific orientation w.r.t. the aircraft, at least one (physical) property of a given test object can be determined by means of a sensor device under test. This may comprise, without limitation, taking a picture by means, e.g., of a camera and comparing said picture with a reference picture which is stored within or which can be assessed by a sensor check algorithm, which is an example of the above-mentioned comparison unit. If a certain threshold of dissimilarity of the two pictures is exceeded, i.e., depending on a comparison carried out by said comparison unit, a maintenance action can be triggered and/or performed automatically, e.g. by a dedicated maintenance device, a robot manipulator, a human worker, a monitoring program, etc. In the same manner, all different sensor systems of the aircraft can be checked against corresponding reference values, pictures, data, etc., in order to check if the sensor systems are still working (positioned, oriented) correctly.

The sensor check algorithm, which is an example of the above-mentioned comparison unit, preferably is aware of the location and the physical characteristics of the at least one reference object or test object, in addition to the (relative) positions and orientations of the various sensors onboard the aircraft (i.e., at least of the one sensor under test). Preferably, an exact location and orientation of the different sensor systems can be calculated (by comparing reference data with the actual sensed data), in particular by the sensor check algorithm, which is an example of the above-mentioned comparison unit. As a result, it can be determined if, e.g., a camera (or any other sensor device) is still oriented correctly or if it has tilted during flight, for instance due to a collision (e.g. bird strike).

In an embodiment of the method according to the invention, the aircraft is positioned at a known relative position with respect to the test object, wherein preferably the aircraft is positioned at a fixed test position and the test object at a fixed object position. In this way, the measured sensor data can be employed directly for sensor testing, since the relative position of aircraft and test object is known.

In a corresponding embodiment of the testing device according to the invention, the test device has a predetermined position w.r.t. the aircraft and/or w.r.t. the test object, preferably wherein the test object is arranged permanently at the predetermined position.

In an embodiment of the testing device according to the invention, the testing device has a movement device for moving the aircraft and/or the test object, preferably for moving the aircraft and the test object (automatically, semi-automatically or by human operation) into the predetermined relative position. In this way, a known or advantageous relative position can be achieved prior to sensor testing, thus enhancing a result thereof.

In another embodiment of the method according to the invention, a relative position of the aircraft and the test object is determined by measurement after the aircraft has been positioned. In this way, said relative position needs not be known in advance, which makes the method more flexible in use.

In a corresponding embodiment of the testing device according to the invention, a position determination unit for determining the relative position is provided, which position determination unit is operatively connected to the test control unit and/or the comparison unit. An output of said position determination unit can either be used by said movement device for moving the aircraft and/or the test object, or by said sensor check algorithm, which is an example of the above-mentioned comparison unit, for correctly carrying out said comparison.

In a further embodiment of the method according to the invention, the check routine is carried out after a number of operations of the aircraft, preferably after each operation of the aircraft, and/or at specific times (or time intervals) and/or depending on specific events. In this way, sensor testing can be adapted to different use scenarios and/or safety requirements.

In yet another embodiment of the method according to the invention, the check routine is performed simultaneously or with a time delay for several sensors of the same sensor type or of different sensor types, preferably using test objects adapted to a respective sensor type. In this way, a duration of testing can be adapted to different use scenarios and/or safety requirements.

In a corresponding embodiment of the testing device according to the invention, the test control unit is designed for controlling a plurality of sensors of the same sensor type or of different sensor types, installed on the aircraft, at the same time or with a time offset, preferably using a test object which is matched in each case to a particular sensor type under test.

In a further embodiment of the method according to the invention, the comparison signal or a signal derived therefrom is sent to a maintenance device, which maintenance device (e.g., a robotic manipulator or the like) preferably executes the maintenance routine automatically. This may contribute to a completely automated operation of an air transportation system.

In a corresponding embodiment of the testing device according to the invention, a maintenance device is provided which is designed to automatically carry out the maintenance routine in accordance with the comparison signal or a signal derived therefrom.

In an embodiment of the method according to the invention, the maintenance routine includes replacement, recalibration, cleaning and/or repositioning of the sensor, either by a human operator or by said robotic manipulator or the like. It is also possible that the sensor recalibrates, cleans or repositions itself by means of in-built actuators such as wipers or servomotors.

In a corresponding embodiment of the testing device according to the invention, the maintenance device is designed to perform a sensor replacement routine, sensor recalibration, sensor cleaning and/or sensor repositioning.

In yet another embodiment of the testing device according to the invention, the sensor is an optical sensor, an acoustic sensor or an electromagnetic sensor, and wherein the test object is an optically effective object, preferably an optical pattern, an acoustically effective object or an electromagnetically effective object. However, the invention is by no means limited to any particular type of sensor or any combination/number of sensors or sensor types.

Further advantages of the invention will now be described with reference to preferred embodiments thereof with respect to the drawings.
Figure 1 shows a schematic overview of a sensor testing device according to the invention;
Figure 2 shows a checkerboard used for calibration of an optical sensor device (camera); and
Figure 3 shows a flowchart of an embodiment of the method according to the invention.

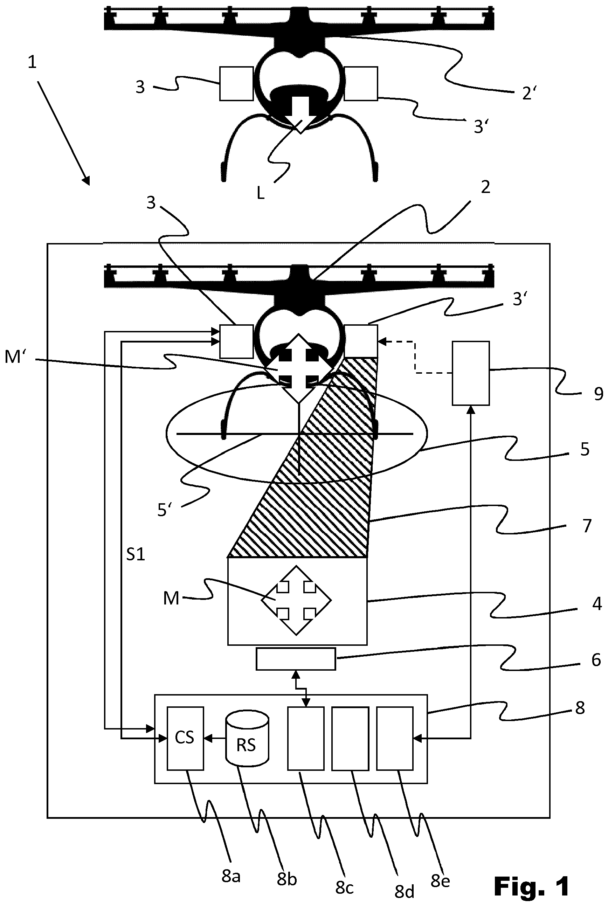

Figure 1 shows a schematic overview of a sensor testing device according to the invention, which testing device is generally denoted by reference numeral 1. Reference numeral 2 denotes eVTOL (electric vertical take-off and landing) aircraft in the form of an electrically powered multicopter, e.g., Volocopter® fabricated by the applicant, which can be devised as an autonomously navigating VTOL aircraft. Said testing device 1 is devised for testing of a navigation and safety system of the aircraft 2, which navigation and safety system comprises at least one sensor device, which sensor device has at least one sensor of a sensor type mounted in or on the aircraft 2. In Figure 1, two such sensors are shown and denoted by reference numeral 3, 3'. It shall be assumed - without limitation - that sensors 3, 3' are of a common type, as explained farther up.

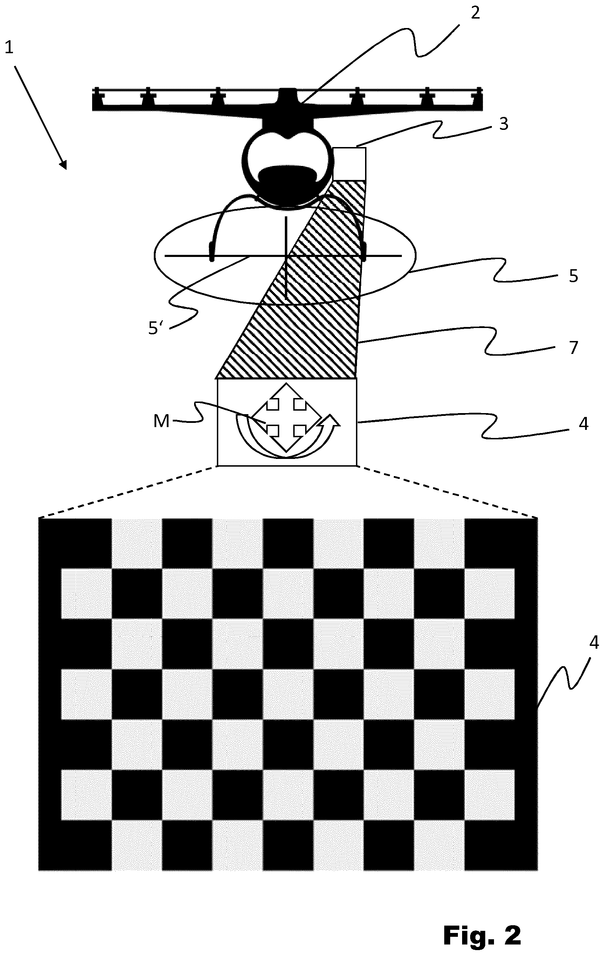

The testing device 1 also comprises a test or reference object 4, relative to which the aircraft 2 is positioned or positionable on a landing platform 5 at a relative position within the testing device 1. The test object 4 is matched to the specific sensor type to be tested, as will be explained below with reference to Figure 2. It can be in a permanently fixed position or it can be movable, as indicated at reference numeral M by means of a movement device 6, e.g., a robotic manipulator. The aircraft 2 on platform 5 can be moveable as well, as indicated at reference numeral M', preferably by moving said platform 5 together with aircraft 2 by means of another movement device (not shown). Alternatively, platform 5 can present a fixed (known) position for aircraft 2, said position denoted at reference numeral 5'. In this way, test object 4 can be located within a field of view (field of detection) of sensors 3, 3', only one of which is shown at reference numeral 7 for sake of clarity. Furthermore, a precise relative position of test object 4 and aircraft 2 is known.

The testing device 1 further comprises a test control unit 8 for driving the sensors 3, 3' in order to determine at least one characteristic of the test object 4 by means of the sensors 3, 3' and to generate a corresponding sensor signal S1, which sensor signal S1 generally will be dependent on said relative position between aircraft 2 and test object 4. To this end, the test control unit 8 preferably interacts, in wired or wireless fashion, with the sensors 3, 3', which is indicated for one of the sensors 3, 3' only. The test control unit 8 can be located either onboard aircraft 2 (which is preferred) or (at least in part) on the ground (as shown). It can be devised in software form on a suitable computer and comprises: a comparison unit 8a which is designed to compare the sensor signal S1 with a known reference signal RS stored in a storage unit 8b and to generate a corresponding comparison signal CS for use within test control unit 8. It further comprises a movement control unit 8c devised for controlling movement device 6 and/or said other movement device (not shown). It further comprises a position determination unit 8d which is devised for determining the relative position of aircraft 2 and test object 4, especially if the latter are not arranged in fixed known positions, respectively. To this end, said position determination unit 8d can be provided with a position sensor (not shown) located outside test control unit 8. Finally, test control unit 8 comprises a maintenance control unit 8e for controlling a maintenance device 9, e.g., a robotic manipulator devised for automatically performing a maintenance routine on the sensors 3, 3' in dependence on a characteristic of the comparison signal CS, i.e., if a malfunctioning etc. of one of the sensors 3, 3' is detected. This detection can be based on the fact that the sensor signal S1 deviates from reference signal RS, and translates to a corresponding characteristic of the comparison signal CS (or a signal derived therefrom).

Test control unit 8 may be configured to perform the described test or check routine regularly upon each touchdown of aircraft 2, or at pre-set time intervals, or after particular events, e.g., collisions (bird strike). This can encompass all sensors 3, 3' installed in/on the aircraft 2 or any combination/selection of sensors 3, 3'. Preferably, all sensors at least of a given type are tested together.

Figure 1 shows another aircraft 2', which has not yet landed on platform 5 within testing device 1. Said other aircraft 2' may either wait until aircraft 2 has left testing device 1, or may proceed to landing (arrow denoted by reference numeral L) at another testing device (not shown, preferably similar to testing device 1).

Figure 2 shows a specific example of testing an optical (camera) sensor 3, which uses a checkerboard as test object 4 for calibration. Please refer to the description of Figure 1 for definition of reference numerals. Not all features described with respect to Figure 1 are shown in Figure 2 for clarity's sake.

Figure 2 proposes to check, within the context of the invention, the geometrical calibration of a single camera (i.e., a specific example of sensor 3) with its intrinsic and extrinsic properties. Vibration and impacts with debris or objects could change a relative orientation between the lenses (not shown) and among the lenses and the camera chip, thus yielding different intrinsic parameters with respect to the original camera calibration. Eventually, this results in wrong assessments of the location of the objects in the world (the surroundings) or an erroneous estimation of the aircraft 2 in the world (the surroundings). To assess the need of maintenance, it is possible to proceed as follows:

A checkerboard as the one depicted as test object 4 in Figure 2 is displayed in the field of view of the camera (sensor 3) in multiple positions and orientations spanning the whole camera field of view 7. For each of these orientations and positions, a picture is acquired with the camera 3. Theoretically, six pictures are sufficient. Usually, more images are acquired to allow for more robust results.

For each picture, an image processing algorithm, which may be located in the test control unit 8 (Figure 1), extracts the position of the corners of the checkerboard 4 and stores them. Knowing the size, the number of squares and the fact that the lines of the checkerboard 4 are straight, it is possible to compute, with the previously acquired images, the intrinsic and extrinsic parameters of the camera 3, plus the distortion coefficients for the lenses. Knowing the original calibration parameters, i.e., a reference signal as explained above, it is then possible to compute the variation of the parameters and therefore assess if the camera 3 needs maintenance.

For instance, the above-described procedure could be carried out without positioning the aircraft 2 at an exact position and orientation within the testing device 1. It is possible, as explained before, that ground-based sensor systems (not shown) detect the exact position and orientation of the aircraft 2 and can therefore calculate the correlation of any (fixed) test objects 4 which are then detected and compared against by the aircraft 2, by means of sensor 3, preferably by at least two different sensor systems of aircraft 2.

Although it is preferably that all sensor systems onboard the aircraft 2 are being checked during ground turnaround, it is also possible that only one (or any number of different) sensor system/s is/are subjected to the described automatic sensor suite check routine.

In the same manner, although it is preferably that the described sensor suite check routine is conducted after every flight, it is also possible to conduct such routine for example at the end of every working day, or every two days, etc. It is also possible to conduct such routine only when there has been a problem detected during flight, e.g., a bird strike or the like. Also, there are some routine procedures that can be performed before every flight, and other procedures that are done after a certain number of operational hours for maintenance.

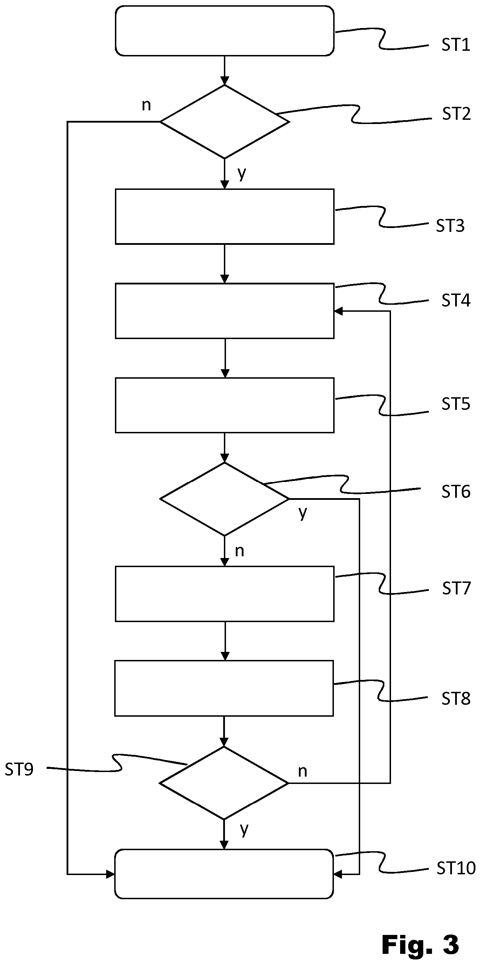

Figure 3 shows a flowchart for illustrating an embodiment of the method according to the present invention.

The method starts with step ST1. In step ST2, a query is made as to whether it is necessary to carry out a sensor test routine or not. For example, it may be necessary to perform the sensor test routine if a particular event, such as a bird strike or the like, has occurred during the flight. It may also be necessary to perform the sensor test routine if a certain time interval has elapsed since the last test. If the query in step ST2 is negated (n), the procedure jumps to step ST10 and ends there. Otherwise, step ST3 first ensures that the aircraft and a test object intended for testing a given sensor are in a known relative position to each other; if necessary, the aircraft and/or the test object is/are moved and suitably positioned. Subsequently, in step ST4, a sensor to be tested is controlled by the test control unit in order to determine at least one property of the test object by means of the sensor, to generate a corresponding sensor signal and to transmit it to the test control unit. This is done in step ST5. Step ST6 compares the sensor signal with a known (stored) reference signal. If the comparison in step ST6 shows that the sensor signal matches the reference signal with sufficient accuracy (query in step ST6 affirms (y)), the procedure jumps to step ST10 and ends there. Otherwise (n), a maintenance signal is generated in step ST7 and transmitted to a maintenance unit, in particular in the form of a robot or the like, whereupon the sensor is preferably automatically maintained (repaired) in step ST7, by the maintenance unit. Subsequently, in step for ST8, the sensor is actuated again in order to determine at least one property of the test object by means of the sensor and to generate a corresponding sensor signal, which is transmitted to the test control unit. If, in step ST9, a new comparison with the reference signal subsequently results in the result that the sensor signal now matches the reference signal with sufficient accuracy (y), the procedure ends with step ST10. Otherwise ((n) in step ST9), the procedure returns to step ST4.

## Claims

1. A method of testing a navigation and safety system of an aircraft (2), preferably an autonomously navigating VTOL aircraft, which navigation and safety system comprises at least one sensor device, which sensor device has at least one sensor (3, 3') of a sensor type mounted in or on the aircraft (2), wherein
a check routine is performed during which:
a) the aircraft (2) is positioned relative to a test object (4) at a relative position, or vice versa;
b) at least one property of the test object (4) is determined by means of the sensor (3, 3') and a corresponding sensor signal (S1), in particular a sensor signal (S1) which is dependent on the relative position, is generated;
c) the sensor signal (S1) is compared with a known reference signal (RS) and a corresponding comparison signal (CS) is generated; and
d) a maintenance routine for the sensor (3, 3') is triggered as a function of a property of the comparison signal (CS).

2. The method according to claim 1, wherein
the aircraft (2) is positioned at a known relative position with respect to the test object (4), wherein preferably the aircraft (2) is positioned at a fixed test position (5') and the test object (4) is positioned at a fixed object position.

3. The method according to claim 1 or 2, wherein
a relative position of the aircraft (2) and the test object (4) is determined by measurement after the aircraft (2) has been positioned.

4. The method according to any one of claims 1 to 3, wherein
the check routine is carried out after a number of operations of the aircraft (2), preferably after each operation of the aircraft (2), and/or at specific times or time intervals and/or depending on specific events.

5. The method according to any of claims 1 to 4, wherein
the check routine is performed simultaneously or with a time delay for several sensors (3, 3') of the same sensor type or of different sensor types, preferably using test objects (4) adapted to a respective sensor type.

6. The method according to any of claims 1 to 5, wherein
the comparison signal (CS) or a signal derived therefrom is sent to a maintenance device (9), which maintenance device (9) preferably executes the maintenance routine automatically.

7. The method according to any of claims 1 to 6, wherein
the maintenance routine includes replacement, recalibration and/or repositioning of the sensor (3, 3').

8. A testing device (1) for a navigation and safety system of an aircraft (2), preferably an autonomously navigating VTOL aircraft, which navigation and safety system comprises at least one sensor device, which sensor device has at least one sensor (3, 3') of a sensor type mounted in or on the aircraft (2), the testing device (1) comprising:
a) a test object (4), relative to which the aircraft (2) is positioned or positionable at a relative position, or vice versa;
b) a test control unit (8) for driving the sensor (3, 3') in order to determine at least one characteristic of the test object (4) by means of the sensor (3, 3') and to generate a corresponding sensor signal (S1), wherein the sensor signal (S1) preferably is dependent on said relative position;
c) a comparison unit (8a) which is designed to compare the sensor signal (S1) with a known reference signal (RS) and to generate a corresponding comparison signal (CS); and
d) a maintenance control unit (8e) adapted to initiate a maintenance routine for the sensor (3, 3') in dependence on a characteristic of the comparison signal (CS).

9. The testing device (1) according to claim 8, wherein
the test control unit (8) is designed for controlling a plurality of sensors (3, 3') of the same sensor type or of different sensor types, installed on the aircraft (2), at the same time or with a time offset, preferably using a test object (4) which is matched in each case to the sensor type.

10. The testing device (1) according to claim 8 or 9, wherein
the testing device (1) has a predetermined position (5') for the aircraft (2) and/or for the test object (4), preferably wherein the test object (4) is arranged permanently at the predetermined position.

11. The testing device (1) according to any one of claims 8 to 10, wherein the testing device (1) has a movement device (6) for moving the aircraft (2) and/or the test object (4), preferably for moving the aircraft (2) and the test object (4) into a predetermined relative position.

12. The testing device (1) according to any one of claims 8 to 11, wherein
a position determination unit (8d) for determining the relative position is provided, which position determination unit (8d) is operatively connected to the test control unit (8) and/or the comparison unit (8a) or which position determination unit (8d) is part of the test control unit (8).

13. The testing device (1) according to any of claims 8 to 12, wherein
a maintenance device (9) is provided, which is designed to automatically carry out the maintenance routine in accordance with the comparison signal (CS) or a signal derived therefrom.

14. The testing device (1) according to claim 13, wherein
the maintenance device (9) is designed to perform a sensor replacement routine, sensor recalibration and/or sensor repositioning.

15. The testing device (1) according to any of claims 8 to 14, wherein
the sensor (3, 3') is an optical sensor, an acoustic sensor or an electromagnetic sensor, and wherein the test object (4) is an optically effective object, preferably an optical pattern, an acoustically effective object or an electromagnetically effective object.
